# FASCICULE DE BREVET EUROPEEN

(11) **EP 0 528 731 B1**
(45) Date de publication et mention de la délivrance du brevet: **07.01.1999**
(21) Numéro de dépôt: 92402298.1
(22) Date de dépôt: 18.08.1992
(51) Int. Cl.: B23K 20/24, B23K 20/06, B23K 11/34, B23K 11/02

(54) **Procédé et dispositif de soudage de deux pièces métalliques hétérogènes**
Methode und Verfahren zum Schweissen von Verbindungen zwischen zwei Metallstücke unterschiedlicher Metallurgie
Method and process for welding two pieces having a different metallic structures

(30) Priorité: 20.08.1991 FR 9110440
(43) Date de publication de la demande: 24.02.1993
(73) Titulaire: COMMISSARIAT A L'ENERGIE ATOMIQUE, 75015 Paris (FR)
(72) Inventeur: Truffier, Jean-Louis, F-91400 Orsay (FR)
(74) Mandataire: Signore, Robert

(56) Documents cités:
- FR-A- 2 602 625
- PATENT ABSTRACTS OF JAPAN vol. 6, no. 113 (M-138)24 Juin 1982
- WELDING PRODUCTION vol. 28, no. 2, Février 1981, CAMBRIDGE GB pages 17 - 18 STRIZHAKOV ET AL 'Magnetic pulse welding in vacuum with preheating'

## Description

L'invention concerne un procédé et un dispositif permettant le soudage, sans métal d'apport, de deux pièces métalliques, telles que des barreaux ou des tubes, ayant des points de fusion différents.

Pour effectuer le soudage bout à bout ou plan sur plan de deux pièces métalliques, sans métal d'apport, il est connu de chauffer simultanément les deux pièces par effet Joule, en leur appliquant un courant électrique pulsé de forte intensité après les avoir amenées en contact selon le plan de joint dans lequel on désire réaliser la soudure. Lorsque le chauffage conduit à une fusion locale des pièces aux environs de l'interface, un choc mécanique est appliqué sur les pièces afin de chasser le métal en fusion et de réaliser la liaison désirée, après refroidissement.

Lorsque les points de fusion des deux pièces sont les mêmes ou très proches l'un de l'autre, le chauffage par effet Joule permet d'assurer la fusion des deux métaux au voisinage de l'interface, où la résistance électrique est plus élevée en raison de la présence d'impuretés (oxydes). Par conséquent, les impuretés et les composés définis ou intermétalliques fragiles qui se trouvent dans cette zone d'interface sont pratiquement éjectés en totalité lorsqu'un choc mécanique est appliqué sur les pièces. Après refroidissement, les atomes constitutifs des deux métaux sont donc en contact intime les uns avec les autres pour créer une liaison interatomique métallique qui garantit la bonne qualité du soudage.

En revanche, lorsque les points de fusion des deux pièces métalliques sont sensiblement différents, le chauffage par effet Joule conduit à une mauvaise fusion du métal ou de l'alliage métallique qui présente le point de fusion le plus élevé. Par conséquent, lorsqu'un choc mécanique est appliqué sur les pièces, les impuretés et les composés définis ou intermétalliques fragiles qui se trouvent à la surface de cette pièce ne sont pas éjectés ou ne sont éjectés que très partiellement. Ces impuretés et ces composés restent présents à l'interface entre les deux pièces lorsque celles-ci sont refroidies. Il n'y a donc pas de liaison interatomique métallique entre les pièces et les retraits de dilatation qui se produisent lors du refroidissement engendrent des contraintes résiduelles qui rendent la liaison mécanique ainsi obtenue particulièrement fragile. Par conséquent, une soudure ainsi réalisée est particulièrement fragile et peut se rompre à tout moment lorsqu'elle est soumise à des efforts mécaniques importants.

Pour que deux pièces métalliques présentant des points de fusion sensiblement différents puissent être soudées entre elles sans métal d'apport selon les techniques classiques, d'une manière telle que la résistance de liaison obtenue soit satisfaisante, il faut à la fois que l'un des métaux des pièces en présence permette la dissolution des oxydes initialement présents dans l'interface et que le diagramme d'équilibre des métaux en présence ne permette pas l'apparition de solutions solides entre ces métaux, afin que des composés intermétalliques fragiles n'apparaissent pas lorsque la limite de solubilité de ces solutions solides est atteinte. Dans la pratique, ces deux conditions sont très rarement rencontrées, de telle sorte que le procédé connu de soudage sans métal d'apport décrit précédemment est pratiquement inutilisable pour des métaux présentant des points de fusion sensiblement différents, dès qu'une certaine exigence de tenue mécanique est requise.

Le document JP-A-57 041 891 propose de souder bout à bout, par effet Joule et par pression, un barreau de cuivre et un barreau d'acier inoxydable. Plus précisément, ce document vise à résoudre le problème posé par la différence qui existe entre les résistances électriques de ces deux matériaux, lorsque la technique du soudage bout à bout sous pression, par électrochauffage, leur est appliquée. Du fait de la grande différence qui existe entre les résistances électriques du cuivre et de l'acier inoxydable, le point de fusion du barreau en acier est atteint avant celui du barreau en cuivre. Par conséquent, la fusion du barreau en acier est excessive lorsque celui du barreau en cuivre est atteint, et une soudure satisfaisante n'est pas possible.

Selon le document JP-A-57 041 891, ce problème est résolu en adaptant la technique classique de soudage par effet Joule et par pression de la façon suivante :
- le barreau en cuivre est serré dans un mandrin en acier inoxydable ;
- après que les deux barreaux aient été amenés en butée l'un contre l'autre, on préchauffe la partie terminale correspondante du barreau en cuivre au moyen d'un bobinage haute fréquence, formé par exemple de deux éléments en forme de C, à une température déterminée permettant de compenser le retard de fusion du barreau en cuivre, lors de la mise en oeuvre du procédé classique ; les étapes habituelles du procédé classique sont ensuite mises en oeuvre pour fondre les extrémités des barreaux par électrochauffage et les presser l'un contre l'autre, afin de réaliser le soudage proprement dit.

L'invention a pour objet un procédé et un dispositif permettant le soudage, sans métal d'apport, de deux pièces métalliques ayant des points de fusion différents, grâce auxquels une liaison mécanique aussi résistante que si les points de fusion des deux pièces étaient les mêmes peut être obtenue.

Conformément à l'invention, ce résultat est obtenu au moyen d'un procédé et d'un dispositif de soudage de deux pièces métalliques ayant des points de fusion sensiblement différents, conformeS aux revendications 1 et 6.

Avantageusement, le préchauffage est réalisé en chauffant la pièce qui a le point de fusion le plus élevé, dans la zone à souder, et en plaçant l'autre pièce à proximité de la première, à une distance telle que la zone à souder de cette autre pièce soit préchauffée à une température proche de son point de fusion, lorsque la première pièce est elle-même chauffée à une température proche de son point de fusion.

Dans un mode de réalisation préféré de l'invention se rapportant au soudage bout à bout de pièces métalliques allongées, dans lequel l'interface est formée entre deux extrémités de ces pièces, on chauffe l'extrémité de la première pièce au moyen d'un bobinage haute fréquence placé autour de cette extrémité.

Comme dans le procédé de soudage classique, le chauffage des deux pièces dans la zone à souder jusqu'à leur fusion est avantageusement réalisé par effet Joule, en faisant circuler un courant électrique entre ces pièces.

Par ailleurs, le choc mécanique est appliqué de préférence sur l'une des pièces, alors que l'autre pièce est maintenue en appui contre un organe de butée mobile assurant la mise en contact préalable des extrémités des deux pièces.

En outre, les moyens pour déplacer longitudinalement au moins l'un des supports comprennent de préférence un vérin apte à déplacer longitudinalement un premier des supports vers le deuxième support.

Par ailleurs, les moyens pour appliquer un choc mécanique sur les deux pièces comprennent avantageusement un canon à gaz apte à propulser un marteau contre le deuxième support.

Un mode de réalisation préféré de l'invention va à présent être décrit, à titre d'exemple non limitatif, en se référant aux dessins annexés, dans lesquel :
- la figure 1 est une vue de côté illustrant schématiquement un dispositif de soudage conforme à l'invention ;
- la figure 2 est une vue de côté, en coupe partielle, représentant à plus grande échelle une partie du dispositif de la figure 1 ;
- les figures 3A à 3C illustrent trois étapes successives du procédé de soudage selon l'invention ; et
- la figure 4 montre la répartition dans le temps et la durée des différentes opérations qui sont effectuées lors de la mise en oeuvre du procédé de soudage selon l'invention.

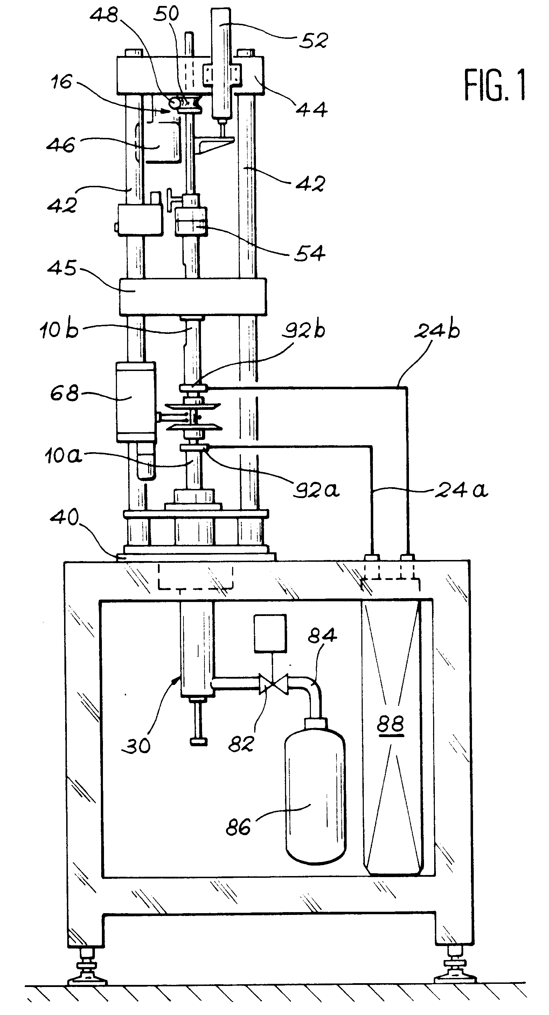

Comme l'illustre la figure 1, le dispositif de soudage selon l'invention comprend un bâti 40 au-dessus duquel font saillie deux colonnes verticales 42. A leur extrémité supérieure, les colonnes 42 portent une traverse horizontale 44. Une traverse intermédiaire 45 relie également les colonnes 42 entre la traverse 44 et le bâti 40.

La traverse 44 supporte un ensemble moto-réducteur 46, à grande vitesse, dont l'arbre de sortie horizontal porte une vis sans fin 48, engrénée sur une denture extérieure formée sur un écrou 50, d'axe vertical. L'écrou 50 est immobilisé en translation par rapport à la traverse horizontale 44, et en prise sur une vis formée à l'extrémité haute d'un support supérieur 10b, d'axe vertical. L'écrou 50 et la vis formée sur le support 10b forment un vérin mécanique irréversible 16 dont on verra par la suite qu'il assure notamment la mise en contact des pièces à souder.

Le support supérieur 10b est placé entre les colonnes 42 et il est guidé dans des alésages formés dans les traverses 44 et 45. Un capteur de déplacement 52, interposé entre le support 10b et la traverse supérieure 44, permet de mesurer les déplacements verticaux des supports commandés par l'ensemble moto-réducteur 46. En outre, un capteur de force 54 est placé dans le support supérieur 10b, entre le vérin mécanique 16 et la traverse 45.

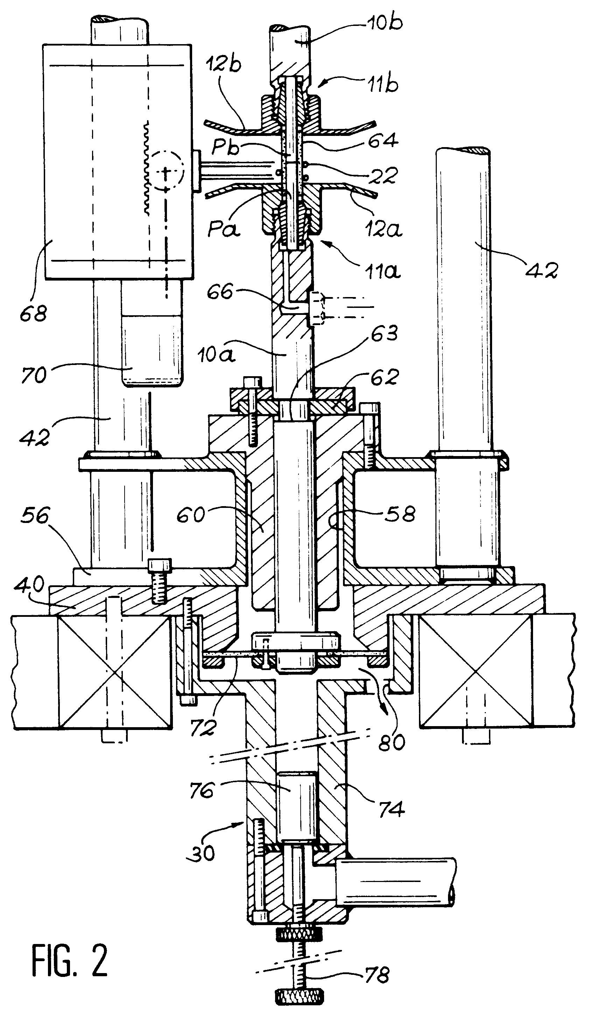

Comme l'illustre plus précisément la figure 2, le support supérieur 10b porte à son extrémité basse une pince 11b dans laquelle peut être fixée l'une Pb des pièces à souder, qui a le point de fusion le plus faible. La pièce Pb est une pièce de forme allongée, telle qu'une barre ou un tube métallique. La pince 11b comporte une partie saillante 12b en forme de disque, servant à limiter la dissipation thermique vers le haut.

On voit également sur la figure 2 que le bâti 40 supporte sur sa face supérieure une embase 56 pourvue, entre les colonnes 42, d'un alésage vertical 58 dans lequel est fixée une douille 60 recevant un support inférieur 10a. L'axe vertical de ce support inférieur 10a est confondu avec celui du support supérieur 10b. Le support inférieur 10a est fixé à la douille 60 par un presse-étoupe 62 logé dans une gorge 63, de façon à laisser au support une possibilité limitée de déplacement axial.

A son extrémité haute, le support inférieur 10a porte une pince 11a dans laquelle peut être fixée l'autre pièce à souder Pa qui a le point de fusion le plus élevé. Comme la pièce Pb, la pièce Pa est une pièce de forme allongée, telle qu'une barre ou un tube métallique. La pince 11a comporte une partie saillante 12a, en forme de disque, servant à limiter la dissipation thermique vers le bas.

Dans leurs parties situées entre les pinces 11a et 11b, les pièces Pa et Pb sont entourées par un tube de silice 64 limitant autour des pièces un espace annulaire de faible épaisseur. Un gaz inerte est injecté dans cet espace, pendant toute la durée du soudage, par un passage 66 formé dans le support inférieur 10a. Ce gaz ressort à l'extrémité supérieure du tube 64 et isole ainsi de l'atmosphère extérieure la zone à souder.

Un bobinage hélicoïdal haute fréquence 22, formé d'au moins une spire enroulée autour de l'axe longitudinal commun aux pièces Pa et Pb, est placé autour du tube de silice 64. Ce bobinage 22 est supporté par un chariot 68 supporté par l'une des colonnes 42, de façon à pouvoir être positionné axialement avec une grande précision lors de l'actionnement d'un moteur pas à pas 70.

L'extrémité basse du support inférieur 10a, qui fait saillie au-dessous de la douille 60, est raccordée au bâti 40 par une membrane déformable 72. Un cylindre 74 est fixé au bâti 40, dans le prolongement de l'extrémité basse du support inférieur 10a, pour recevoir un marteau 76 en forme de piston. La position basse occupée au repos par le marteau 76 est déterminée par une vis de réglage 78, vissée dans l'extrémité inférieure fermée du cylindre 74. l'espace délimité dans le cylindre 74 au-dessus du marteau 76 communique avec l'extérieur par un passage 80 formé dans la paroi du cylindre.

Le cylindre 74 et le marteau 76 forment des moyens 30 pour appliquer un choc mécanique sur l'extrémité basse du support inférieur 10a, en profitant du jeu formé entre le presse-étoupe 62 et la gorge 63. Comme l'illustre la figure 1, ces moyens 30 sont actionnés par l'ouverture d'une électrovanne trois voies 82, placée dans une canalisation 84 qui relie un réservoir d'azote 86 au cylindre 74, en dessous du marteau 76. Ces différents organes sont montés dans le bâti 40.

En outre, et comme l'illustre également la figure 1, le bâti 40 supporte une source 88 de courant électrique pulsé de forte intensité, reliée par deux tresses électriquement conductrices 24a, 24b, par exemple de cuivre, à deux bagues 92a, 92b assurant le raccordement électrique des tresses 24a, 24b respectivement sur le support inférieur 10a et sur le support supérieur 10b. Les bagues 92a et 92b, ainsi que les parties des supports 10a et 10b dans lesquelles sont montées les pièces Pa et Pb sont réalisées en un matériau électriquement conducteur tel que du cuivre.

Du côté opposé aux pinces 11a et 11b, par rapport aux bagues 92a et 92b, chacun des supports 10a et 10b comporte une partie (non représentée) réalisée en un matériau électriquement et thermiquement isolant, tel que de l'alumine.

Le dispositif de soudage qui vient d'être décrit en se référant aux figures 1 et 2 est piloté par un micro-ordinateur, de façon à assurer le soudage bout à bout, sans métal d'apport, des pièces Pa et Pb, qui sont réalisées en des matériaux ayant des points de fusion différents.

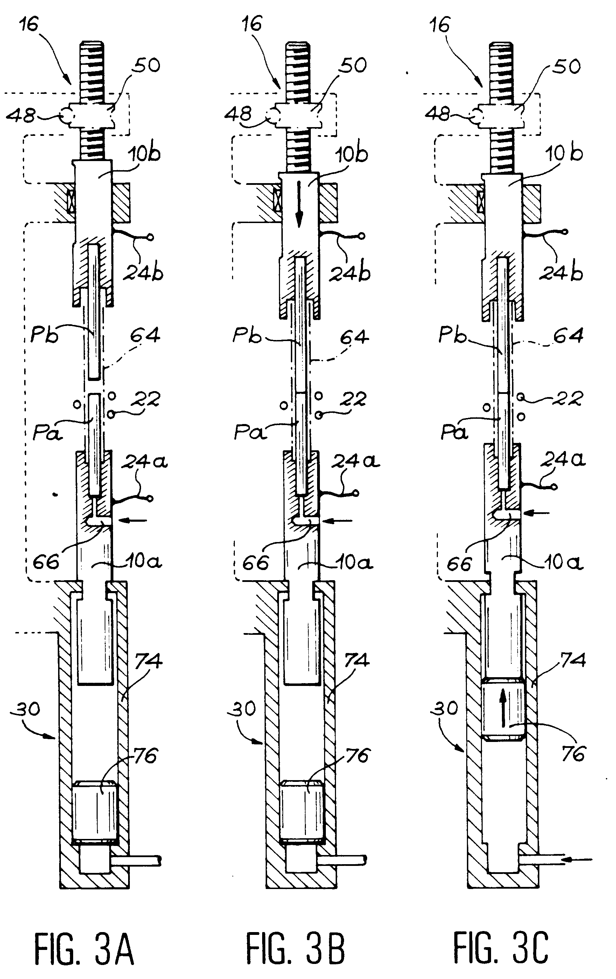

La mise en oeuvre de ce dispositif va à présent être décrite en se référant aux figures 3A à 3C.

Comme l'illustre la figure 3A, les pièces Pa et Pb sont d'abord montées dans les pinces 11a et 11b de leurs supports respectifs 10a et 10b. Le marteau 34 du canon à gaz 32 est alors en position basse (mise à l'atmosphère de la chambre inférieure du cylindre 74 par l'électrovanne 82) et aucun courant électrique n'est envoyé dans les tresses 24a et 24b.

Après le montage des pièces Pa et Pb dans leurs supports respectifs 10a et 10b, la position occupée par le support supérieur 10b est réglée de telle sorte que la distance séparant les extrémités en vis-à-vis des pièces Pa et Pb soit ajustée à une valeur déterminée, qui dépend de la différence entre les points de fusion des pièces Pa et Pb. De façon plus précise, cette distance est ajustée par étalonnage préalable, de telle sorte que le chauffage de l'extrémité de la pièce Pa à l'aide du bobinage haute fréquence 22 s'accompagne d'un chauffage par rayonnement, convection ou haute fréquence résiduelle de l'extrémité en vis-à-vis de la pièce Pa, de telle sorte que les températures atteintes lors du chauffage des extrémités des deux pièces ainsi réalisé correspondent pratiquement aux températures de fusion des deux pièces, tout en restant légèrement inférieures à ces températures de fusion.

Pour effectuer ce réglage, on actionne l'ensemble 46 de commande du vérin mécanique 16 jusqu'à la venue en contact de la pièce Pb contre la pièce Pa, ces deux pièces étant froides. A partir de ce point de référence, on actionne en sens inverse l'ensemble 46 afin d'obtenir entre les pièces Pb et Pa la distance désirée. Cette opération est contrôlée par le capteur de déplacement 52.

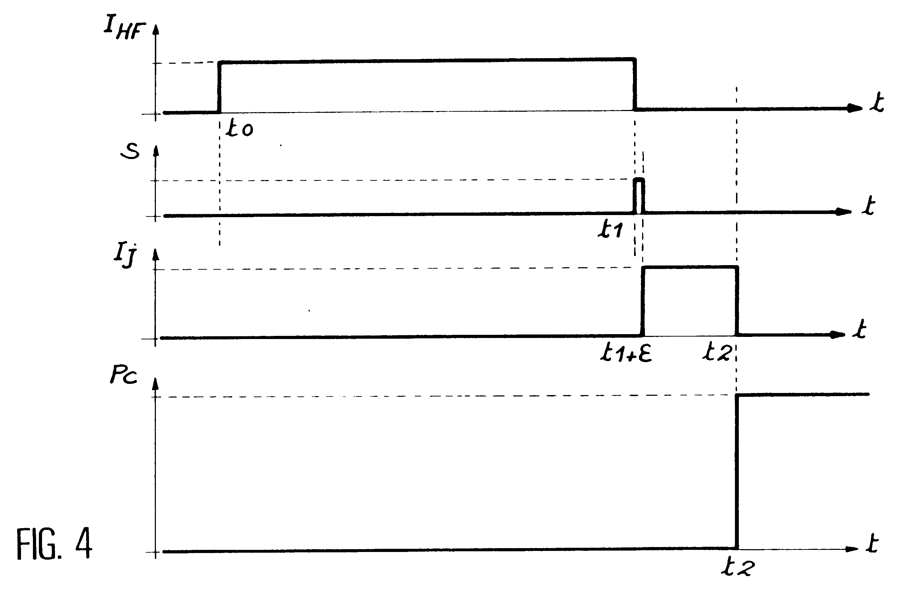

Lorsque ce réglage a été effectué, l'opérateur initie l'automatisme du dispositif, en agissant sur un organe de commande tel qu'un interrupteur. A l'instant t₀ auquel l'automatisme est initié, un courant électrique haute fréquence d'intensité I_{HF} est injecté dans le bobinage haute fréquence 22, comme l'illustre la figure 4. Un système à retard de l'automatisme est également initié à partir du temps t₀, afin de déclencher automatiquement, au bout d'une période prédéterminée, la mise en oeuvre de l'ensemble 46 de commande du vérin 16. Ce temps prédéterminé est également réglé avant la mise en oeuvre du dispositif, selon les matériaux constituant les pièces Pa et Pb, afin que la température de préchauffage de l'extrémité de chacune de ces pièces, atteinte à l'aide du bobinage haute fréquence 22, corresponde à une température voisine du point de fusion du matériau qui la constitue, mais restant légèrement inférieure à ce point.

Lorsque le délai préréglé du système à retard initié à l'intant t₀ est terminé, c'est-à-dire à l'instant t₁ sur la figure 4, un signal S d'alimentation électrique est envoyé dans l'ensemble 46, commandant le vérin mécanique 16. Cela a pour effet la mise en contact sous pression de l'extrémité de la pièce Pb contre l'extrémité en vis-à-vis de la pièce Pa, comme l'illustre la figure 3B. La grande vitesse de déplacement de la pièce Pb lui permet d'arriver en contact de la pièce Pa sans franchir son point de fusion.

Dès que le capteur d'effort 54 ou de déplacement 52 repère ce contact, c'est-à-dire à l'instant t₁ + ε, l'automatisme commande simultanément l'arrêt du signal d'alimentation S, l'arrêt du courant haute fréquence I_{HF} et l'injection par les conducteurs 24a et 24b d'un courant électrique pulsé I_{J} de forte intensité dans les supports 10a et 10b. Ce courant électrique pulsé traverse les pièces Pa et Pb en contact, ce qui a pour effet de chauffer encore ces pièces par effet Joule, notamment dans la zone de plus forte résistance proche de leur interface, dans laquelle se trouvent des oxydes métalliques. Etant donné que les extrémités des deux pièces ont été chauffées au préalable à des températures voisines de leurs points de fusion bien que légèrement inférieures à ces points, le chauffage par effet Joule ainsi effectué apporte à l'extrémité de chacune de ces pièces le surcroît de température nécessaire à la fusion de la zone d'extrémité à souder attenante à l'interface entre les deux pièces. La fusion concomitante de l'extrémité de chacune des deux pièces Pa et Pb peut ainsi être obtenue malgré la différence entre les points de fusion de ces deux pièces.

L'arrivée en contact des extrémités des deux pièces Pa et Pb lors de l'actionnement du vérin 16 déclenche également deux systèmes à retard, réglés au préalable, qui déterminent, d'une part, la mise en oeuvre des moyens 30 d'application d'un choc sur les pièces Pa et Pb (arrivée de pression Pc dans le canon à gaz 32) et la cessation du courant électrique pulsé I_{J} injecté dans les supports 10a et 10b. Ces deux retards peuvent éventuellement être simultanés, comme l'illustre la figure 4. Dans ce cas, la cessation du courant I_{J} intervient en même temps que la mise en oeuvre des moyens d'application d'un choc 30, à l'instant t₂.

Dans le cas où on utilise un canon à gaz 32, l'application d'un choc mécanique est faite en appliquant sur le marteau 34 une pression Pc, à l'instant t₂. Cela a pour effet de propulser le marteau 34 contre la pièce Pa et, par conséquent, d'appliquer un choc mécanique entre les pièces Pa et Pb, dont les extrémités en contact sont alors à l'état fondu. Le métal en fusion formant l'extrémité de chacune des pièces est alors châssé, avec les oxydes, les autres impuretés éventuelles et les composés définis ou intermétalliques éventuellement présents dans le liquide. Par conséquent, un contact intime est établi entre les atomes des deux pièces métalliques et permet de créer une liaison interatomique métallique assurant la solidité de la soudure (figure 3C).

Bien entendu, l'invention n'est pas limitée au mode de réalisation qui vient d'être décrit à titre d'exemple, mais en couvre toutes les variantes. En particulier, les moyens permettant d'appliquer un choc sur les pièces peuvent être associés aux moyens de mise en contact, si une impulsion de pression sensiblement plus élevée que celle qui permet de maintenir les pièces en contact peut être introduite dans ce système. En outre, les deux supports peuvent remplir des rôles comparables aussi bien pour ce qui concerne la mise en pression que pour ce qui concerne l'application d'un choc sur les pièces. Enfin, bien que l'invention soit particulièrement adaptée au soudage bout à bout de deux pièces allongées, elle peut aussi s'appliquer à d'autres géométries quelconque.

La pièce ayant le plus haut point de fusion est préchauffée dans la zone où la liaison est désirée par tout moyen le mieux adapte à la forme des pièces à assembler (arc, laser, HF, etc.). La pièce ayant le plus bas point de fusion étant alors positionnée, par un robot à proximité, pendant ce préchauffage pour recevoir par rayonnement, convection, ou transfert direct, une partie de l'énergie de préchauffage à l'endroit ou la liaison est souhaitée. Lorsque les deux métaux sont dans les zones souhaitées à des températures proches de leurs points de fusion respectifs. Le robot assure la mise en contact de ces zones en respectant un critère de pression ou de déplacement et simultanément provoque le passage d'un courant électrique entre les deux pièces, pour assurer de part et d'autre de l'interface le passage à l'état liquide. Un choc perpendiculaire à l'interface est alors provoqué et transmis par le robot à l'une des pièces pour provoquer son déplacement rapide par rapport à l'autre pièce. Ce déplacement éjecte le liquide et les impuretés présents dans la zone en fusion et assure le rétablissement de la liaison métallique.

## Revendications

1. Procédé de soudage de deux pièces métalliques (Pa,Pb), ayant des points de fusion sensiblement différents, dans lequel les deux pièces sont mises en contact selon une interface donnée et chauffées jusqu'à leur fusion dans une zone à souder englobant ladite interface, puis un choc mécanique est appliqué sur les deux pièces, de façon à chasser le métal en fusion de la zone à souder, le chauffage des deux pièces étant précédé d'un préchauffage dans la zone à souder, caractérisé par le fait qu'on réalise le préchauffage avant que les deux pièces soient mises en contact, à des températures proches de leurs points de fusion respectifs et inférieures à ces derniers, sous atmosphère inerte.

2. Procédé selon la revendication 1, caractérisé par le fait qu'on réalise le préchauffage en chauffant une première pièce ayant le point de fusion le plus élevé, dans la zone à souder et en plaçant l'autre pièce à proximité de la première pièce, à une distance telle que la zone à souder de cette autre pièce soit préchauffée à ladite température proche de son point de fusion, lorsque la première pièce est chauffée à une température proche de son point de fusion.

3. Procédé selon la revendication 2, caractérisé par le fait que les pièces métalliques (Pa,Pb) à souder étant allongées et ladite interface étant formée entre deux extrémités de ces pièces, on chauffe l'extrémité de la première pièce au moyen d'un bobinage haute fréquence (22) placé autour de cette extrémité.

4. Procédé selon l'une quelconque des revendications précédentes, caractérisé par le fait qu'on chauffe les deux pièces dans ladite zone à souder, jusqu'à fusion, par effet Joule, en faisant circuler entre elles un courant électrique.

5. Procédé selon l'une quelconque des revendications précédentes, caractérisé par le fait qu'on applique le choc mécanique sur l'une des pièces, en maintenant l'autre pièce en appui contre un organe de butée (14) mobile assurant auparavant la mise en contact des extrémités des deux pièces.

6. Dispositif de soudage de deux pièces métalliques (Pa,Pb) ayant des points de fusion différents, pour la mise en oeuvre du procédé selon l'une quelconque des revendications précédentes, comprenant :
- deux supports (10a,10b) aptes à recevoir chacune desdites pièces, de telle sorte que des zones à souder de ces deux pièces soient situées en vis-à- vis l'une de l'autre ;
- des moyens de préchauffage contrôlé (22) de la zone à souder d'une première des pièces ;
- des moyens de chauffage (24a,24b) des zones à souder des deux pièces lorsqu'elles sont en contact ; et
- des moyens (30) agissant sur au moins l'un des supports pour appliquer un choc mécanique sur les deux pièces ;
ce dispositif étant caractérisé par le fait qu'il comprend de plus des moyens (16) pour déplacer longitudinalement au moins l'un (10) des supports, de façon à établir une distance prédéterminée entre les pièces, lors de la mise en oeuvre des moyens de préchauffage (22), et de façon à mettre ensuite en contact les zones à souder des deux pièces, avant la mise en oeuvre des moyens de chauffage (24a,24b), et par le fait que les moyens de préchauffage contrôlé (22) sont aptes à chauffer la zone à souder de la pièce qui a le point de fusion le plus élevé.

7. Dispositif selon la revendication 6, caractérisé par le fait que les moyens de préchauffage comprennent un bobinage haute fréquence (22).

8. Dispositif selon l'une quelconque des revendications 6 et 7, caractérisé par le fait que les moyens de chauffage sont des moyens de chauffage par effet Joule (24a,24b), permettant de faire circuler un courant électrique entre les deux supports (10a et 10b), au travers des deux pièces.

9. Dispositif selon l'une quelconque des revendications 6 à 8, caractérisé par le fait que les moyens pour déplacer longitudinalement au moins l'un des supports comprennent un vérin (16) apte à déplacer longitudinalement un premier des supports (10b) vers le deuxième support (10a).

10. Dispositif selon la revendication 9, caractérisé par le fait que les moyens pour appliquer un choc mécanique sur les deux pièces comprennent un canon à gaz (30) apte à propulser un marteau contre le deuxième support (10a).

## Claims

1. Process for welding two metal workpieces (Pa, Pb) having substantially different melting points, in which the two workpieces are brought into contact with each other along a given interface and are heated until they melt in a welding zone encompassing the said interface and then a mechanical shock is applied to the two workpieces so as to expel the molten metal from the welding zone, before the two workpieces are heated the welding zone being preheated, characterized in that the preheating, before the two workpieces are brought into contact with each other, is carried out in an inert atmosphere at temperatures close to but below their respective melting points.

2. Process according to Claim 1, characterized in that the preheating is carried out by heating a first workpiece having the higher melting point in the welding zone and by placing the other workpiece near the first workpiece, at a distance such that the welding zone of this other workpiece is preheated to the said temperature close to its melting point when the first workpiece is heated to a temperature close to its melting point.

3. Process according to Claim 2, characterized in that, since the metal workpieces (Pa, Pb) to be welded are elongate and the said interface is formed between two ends of these workpieces, the end of the first workpiece is heated by means of a high-frequency coil (22) placed around this end.

4. Process according to any one of the preceding claims, characterized in that the two workpieces are heated, until they melt in the said welding zone, by the Joule effect by passing an electric current between them.

5. Process according to any one of the preceding claims, characterized in that the mechanical shock is applied to one of the workpieces, while keeping the other workpiece pressed against a movable stop device (14) which ensures that the ends of the two workpieces are brought into contact with each other beforehand.

6. Apparatus for welding two metal workpieces (Pa, Pb), having different melting points, for the implementation of the process according to any one of the preceding claims, comprising:
- two supports (10a, 10b) each capable of housing the said workpieces in such a way that the welding zones of these two workpieces are located opposite each other;
- means (22) for the controlled preheating of the welding zone of a first of the workpieces;
- means (24a, 24b) for heating the welding zones of both workpieces when they are in contact with each other; and
- means (30) which act on at least one of the supports in order to apply a mechanical shock to both workpieces;
this apparatus being characterized in that it comprises, in addition, means (16) for moving at least one (10) of the supports longitudinally so as to establish a predetermined distance between the workpieces, while the preheating means (22) are being operated, and so as, subsequently, to bring the welding zones of the two workpieces into contact with each other, before the heating means (24a, 24b) are operated, and in that the controlled preheating means (22) are capable of heating the welding zone of the workpiece which has the higher melting point.

7. Apparatus according to Claim 6, characterized in that the preheating means comprise a high-frequency coil (22).

8. Apparatus according to either of Claims 6 and 7, characterized in that the heating means are Joule-effect heating means (24a, 24b) which allow an electric current to pass between the two supports (10a and 10b) through the two workpieces.

9. Apparatus according to any one of Claims 6 to 8, characterized in that the means for moving at least one of the supports longitudinally comprise a cylinder (16) capable of moving a first of the supports (10b) longitudinally towards the second support (10a).

10. Apparatus according to Claim 9, characterized in that the means for applying a mechanical shock to both workpieces comprise a gas gun (30) capable of propelling a hammer against the second support (10a).

## Patentansprüche

1. Verfahren zum Zusammenschweißen von zwei Metallstücken (Pa,Pb) mit deutlich unterschiedlichen Schmelzpunkten, bei dem man die beiden Stücke an einer bestimmten Grenzfläche miteinander in Kontakt bringt und erhitzt, bis sie in einer diese Grenzfläche umfassenden Schweißzone schmelzen, um dann mittels eines auf die beiden Stücke ausgeübten mechanischen Stoßes das geschmolzene Metall aus der Schweißzone hinauszutreiben, wobei dem Heizen der beiden Stücke ein Vorheizen in der Schweißzone vorausgeht,
**dadurch gekennzeichnet,**
daß man in inerter Atmosphäre, ehe die beiden Stücke miteinander in Kontakt gebracht werden, das Vorheizen mit Temperaturen durchführt, die jeweils etwas niedriger als ihre Schmelzpunkte sind.

2. Verfahren nach Anspruch 1, dadurch gekennzeichnet, daß das Vorheizen erfolgt, indem man ein erstes, den höheren Schmelzpunkt aufweisendes Stück in der Schweißzone erhitzt und das andere Stück in der Nähe des ersten Stücks mit einem solchen Abstand anordnet, daß die Schweißzone dieses anderen Stücks auf die genannte, etwas niedrigere Temperatur als sein Schmelzpunkt erhitzt wird.

3. Verfahren nach Anspruch 2, dadurch gekennzeichnet, daß die zu verschweißenden Metallstücke (Pa,Pb) länglich sind und die genannte Grenzfläche sich zwischen zwei Enden dieser Stücke befindet, wobei man das Ende des ersten Stücks mittels einer Hochfrequenzspule (22) erhitzt, die um dieses Ende herum angeordnet ist.

4. Verfahren nach einem der vorangehenden Ansprüche, dadurch gekennzeichnet, daß man die beiden Stücke in der genannten Schweißzone bis zum Schmelzen durch Stromwärme erhitzt, indem man zwischen ihnen einen elektrischen Strom fließen läßt.

5. Verfahren nach einem der vorangehenden Ansprüche, dadurch gekennzeichnet, daß man den mechanischen Stoß auf eines der Stücke ausübt und das andere Stück sich dabei auf einer beweglichen Anschlageinrichtung (14) abstützt, die vorher die Kontaktherstellung zwischen den beiden Stücken sichergestellt hat.

6. Vorrichtung zum Zusammenschweißen von zwei Metallstücken (Pa,Pb) mit unterschiedlichen Schmelzpunkten zur Anwendung des Verfahrens nach einem der vorangehenden Ansprüche, umfassend:
- zwei Halter (10a,10b) zur Aufnahme jeweils eines der genannten Stücke, so daß die Schweißzonen dieser Stücke einander gegenüberstehen;
- Einrichtungen (22) zum kontrollierten Vorheizen der Schweißzone eines ersten Stücks;
- Einrichtungen (24a,24b) zum Heizen der Schweißzonen beider Stücke, wenn sie in Kontakt sind; und
- Einrichtungen (30), die auf wenigstens einen der Halter einwirken, um einen mechanischen Stoß auf die Stücke auszuüben;
wobei diese Vorrichtung dadurch gekennzeichnet ist, daß sie zudem Einrichtungen (16) zur Längsverschiebung wenigstens eines (10) der Halter umfaßt, um vor dem Einschalten der Vorheizeinrichtungen (22) einen festgelegten Abstand zwischen den Stücken herzustellen und anschließend, vor dem Einschalten der Heizeinrichtungen (24a,24b), die zu verschweißenden Zonen der beiden Stücke in Kontakt zu bringen, und dadurch, daß die Einrichtungen (22) zum kontrollierten Vorheizen fähig sind, die Schweißzone des den höheren Schmelzpunkt aufweisendes Stücks zu erhitzen.

7. Vorrichtung nach Anspruch 6, dadurch gekennzeichnet, daß die Vorheizeinrichtungen eine Hochfrequenzspule (22) umfassen.

8. Vorrichtung nach einem der Ansprüche 6 und 7, dadurch gekennzeichnet, daß die Heizeinrichtungen Stromwärme-Heizeinrichtungen (24a,24b) sind, die ermöglichen, einen elektrischen Strom zwischen den beiden Haltern (10a,10b) fließen zu lassen, durch beide Stücke hindurch.

9. Vorrichtung nach einem der Ansprüche 6 bis 8, dadurch gekennzeichnet, daß die Längsverschiebungseinrichtungen wenigstens eines der Halter einen Zylinder (16) umfassen, der einen ersten (10b) der Halter in Richtung des zweiten Halters (10a) verschieben kann.

10. Vorrichtung nach Anspruch 9, dadurch gekennzeichnet, daß die Einrichtungen zur mechanischen Stoßausübung auf die beiden Stücke eine Gaskanone (30) umfassen, die einen Hammer gegen den zweiten Halter (10a) treibt.
